# FASCICULE DE BREVET EUROPEEN

(11) **EP 3 501 098 B1**
(45) Date de publication et mention de la délivrance du brevet: **09.12.2020**
(21) Numéro de dépôt: 17751753.9
(22) Date de dépôt: 11.08.2017
(51) Int. Cl.: H02S 20/32, F24S 25/13, F24S 25/70, F24S 30/425

(54) **SUIVEUR SOLAIRE**
SONNENNACHFÜHRER
SOLAR TRACKER

(30) Priorité: 17.08.2016 FR 1601234; 17.02.2017 EP 17305176
(43) Date de publication de la demande: 26.06.2019
(73) Titulaire: Nexans Solar Technologies, 13790 Châteauneuf-le-Rouge (FR)
(72) Inventeur: TORDO, Jérome, 13100 Aix-En-Provence (FR)
(74) Mandataire: Ipsilon
(86) Numéro de dépôt international: PCT/EP2017/070512
(87) Numéro de publication internationale: WO 2018/033495

(56) Documents cités:
- EP-A2- 2 154 449
- DE-A1-102006 027 152
- FR-A1- 3 001 793
- US-A1- 2008 308 091

## Description

### DOMAINE TECHNIQUE DE L'INVENTION

La présente invention concerne le domaine de l'énergie solaire en général, et plus particulièrement le domaine des suiveurs solaires. Elle trouvera par exemple pour application avantageuse les champs solaires.

### ETAT DE LA TECHNIQUE

L'énergie solaire est aujourd'hui une énergie au cœur de nombreuses innovations technologiques. A l'heure où les besoins énergétiques sont au plus haut, de nombreux Etats de par le monde tendent vers l'utilisation à grande échelle de cette énergie renouvelable.

Que cela soit au travers de panneaux photovoltaïques ou bien de réflecteurs solaires, de nombreux problèmes sont rencontrés par ces installations solaires.

L'une des principales problématiques réside dans l'alignement et le réglage des composants des tables des suiveurs solaires portant les dispositifs de collecte d'énergie solaire sur leurs supports.

Il convient en effet de bien les aligner et de les motoriser afin qu'elles fonctionnement sans contraintes supplémentaire.

Un tel dispositif de suiveur solaire est décrit dans le document FR 3 001 793 A1 par exemple.

Un des enjeux majeurs consiste à obtenir un coût de revient de l'énergie collectée qui soit le plus faible possible. La réduction de ce coût de revient passe par l'augmentation du rendement des champs solaires, mais aussi par une réduction des coûts d'installation et de maintenance de ces champs solaires. Or, dans ce contexte, le coût et la difficulté d'installation des tables motorisées dépendent fortement du terrain sur lequel elles sont construites. En effet, il est difficile de trouver un terrain parfaitement plat afin d'y disposer des lignes de tables sur de très longues distances.

Une solution réside alors dans la réalisation de tables présentant des dimensions réduites afin de pouvoir les disposer entre les irrégularités du terrain. Mais les solutions connues occasionnent alors un coût important à la fois en termes d'installation, d'entretien, mais également de gestion.

Une autre solution repose alors sur l'aménagement et le terrassement du terrain préalablement à l'installation des tables. Mais cela occasionne un coût et un temps d'installation également importants. Tous ces inconvénients réduisent la motivation de certains états pour investir dans ce type de technologies.

Les solutions actuelles pour compenser les irrégularités du sol reposent donc principalement sur une structuration du terrain ou bien sur le réglage de l'alignement des lignes de réflecteurs ou encore sur une forte densité de tables non alignées.

Ainsi les solutions actuelles restent très coûteuses et très complexes face à cette problématique.

La présente invention vise à limiter voire à résoudre certaines au moins des problématiques exposées ci-dessus.

### RESUME DE L'INVENTION

La présente invention concerne un suiveur solaire selon la revendication 1 comprenant au moins :
- un dispositif mobile comprenant au moins :
   ∘ une table s'étendant longitudinalement selon une direction principale d'extension et comprenant, et de préférence étant configuré pour supporter, au moins un dispositif de collecte ou de réflexion d'énergie solaire, de préférence comprenant au moins un panneau photovoltaïque ;
   ∘ une structure de soutien s'étendant longitudinalement sur une longueur L selon la direction principale d'extension et supportant, de préférence à elle seule, la table et comprenant une première extrémité et une deuxième extrémité ;
   ∘ un premier arceau et un deuxième arceau configurés pour supporter la structure de soutien, et de préférence étant solidaire de la structure de soutien ;
- un premier appui au sol et un deuxième appui au sol configurés pour supporter respectivement le premier arceau de support et le deuxième arceau de support,
- un dispositif d'entraînement cinématique, de préférence solidaire du premier appui au sol, configuré pour entraîner en rotation le dispositif mobile par rapport au premier appui au sol et au deuxième appui au sol.

La structure de soutien est une poutre formée d'une structure en treillis rigide comprenant des longerons reliés par des traverses et des tirants.

La structure en treillis comprend au moins un premier, un deuxième et un troisième longerons parallèles entre eux et s'étendant selon la direction principale d'extension.

De préférence, le dispositif mobile est configuré de manière à ce que la poutre soit intégralement supportée par le premier arceau de support et le deuxième arceau de support.

De préférence, le suiveur solaire comprend des organes de roulement montés en rotation sur le premier appui au sol et le deuxième appui au sol, les organes de roulement étant configurés de manière à guider en rotation le premier arceau et le deuxième arceau et à supporter à eux seuls le dispositif mobile.

Les caractéristiques techniques de ce suiveur solaire agissent en synergie pour d'une part supporter efficacement les contraintes mécaniques dynamiques liées à la température ou encore au vent et d'autre part de s'affranchir d'une partie au moins des irrégularités statiques du sol, tout en présentant un coût très limité.

En effet, le suiveur solaire selon ladite invention utilise une structure en treillis, selon sa définition mécanique, dont de préférence chaque élément contribue à la résistance du suiveur solaire aux contraintes mécaniques statiques et dynamiques.

La présente invention permet ainsi d'augmenter la capacité de charge (et donc la surface de collecte d'énergie solaire) du dispositif mobile tout en allégeant considérablement ce dernier. Il permet ainsi la réalisation de suiveurs solaires de grandes dimensions reposant uniquement sur deux appuis au sol et comprenant une motorisation, de préférence unique.

Dans un lieu où l'art antérieur utiliserait une pluralité de tables de petites dimensions et une pluralité de systèmes de motorisation complexes et coûteux, la présente invention permet l'utilisation d'une seule table de grandes dimensions reposant de préférence uniquement sur deux appuis au sol et d'un seul système de motorisation.

Ainsi, la présente invention s'affranchit du problème de synchronisation entre deux tables alignées en proposant une structure dont la dimension principale d'extension est supérieure à celle d'une pluralité de tables de l'art antérieur.

Avantageusement, la présente invention permet de réaliser un suiveur solaire présentant une dimension principale supérieure à 30 m, et donc une importante surface de collecte d'énergie solaire, pour un coût limité.

La présente invention permet de faciliter l'installation d'un champ solaire ainsi que sa maintenance, permettant ainsi d'accroître sa rentabilité.

La présente invention permet également le pré-montage du dispositif mobile, dans un atelier, pouvant être mobile, situé à distance du lieu d'exploitation.

La présente invention permet ainsi l'installation du dispositif mobile en un seul bloc déjà pré-monté en usine ou en atelier mobile.

La présente invention concerne aussi un champ solaire comprenant une pluralité de suiveurs solaires selon l'une quelconque des revendications précédentes, au moins certains des suiveurs solaires étant disposés parallèlement les uns aux autres, de préférence selon la direction Nord/Sud.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

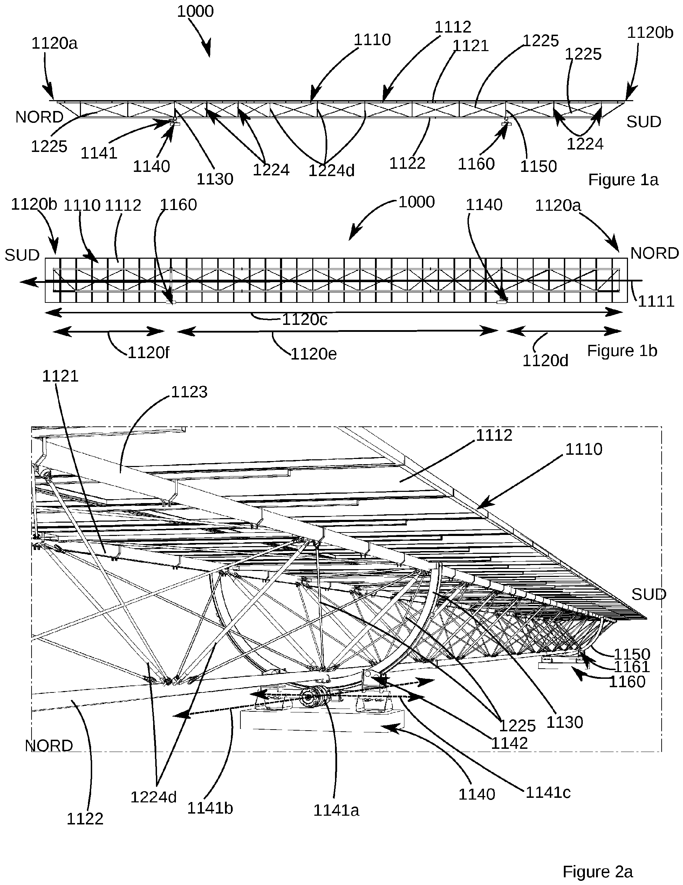

- Les figures 1a et 1b illustrent deux vues de profil d'un suiveur solaire selon un mode de réalisation non limitatif de la présente invention. Dans la figure 1a, la table de ce suiveur solaire est horizontale. Dans la figure 1b, la table de ce suiveur solaire est inclinée.

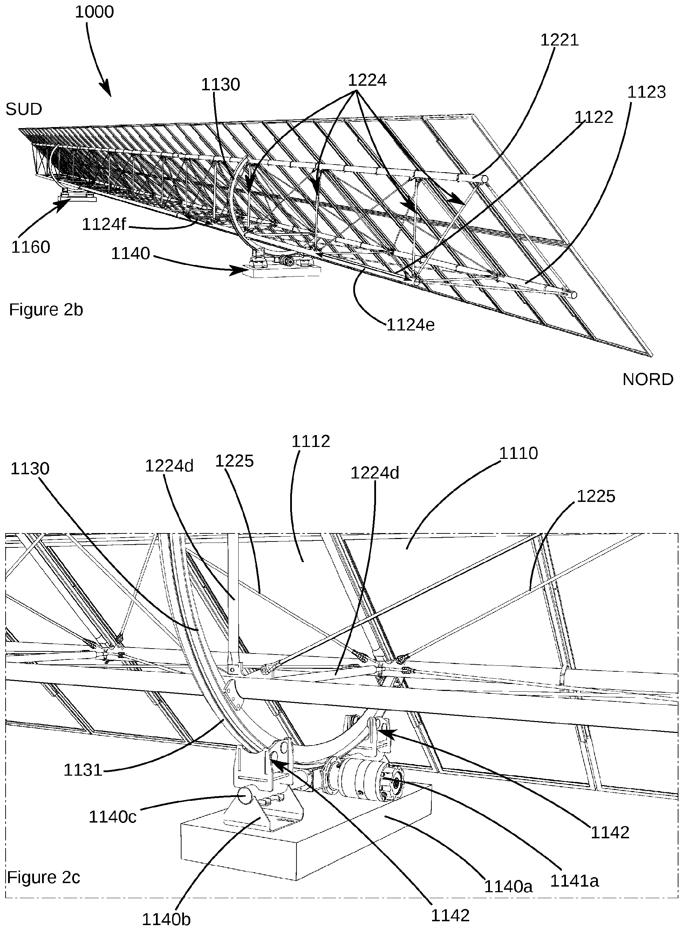

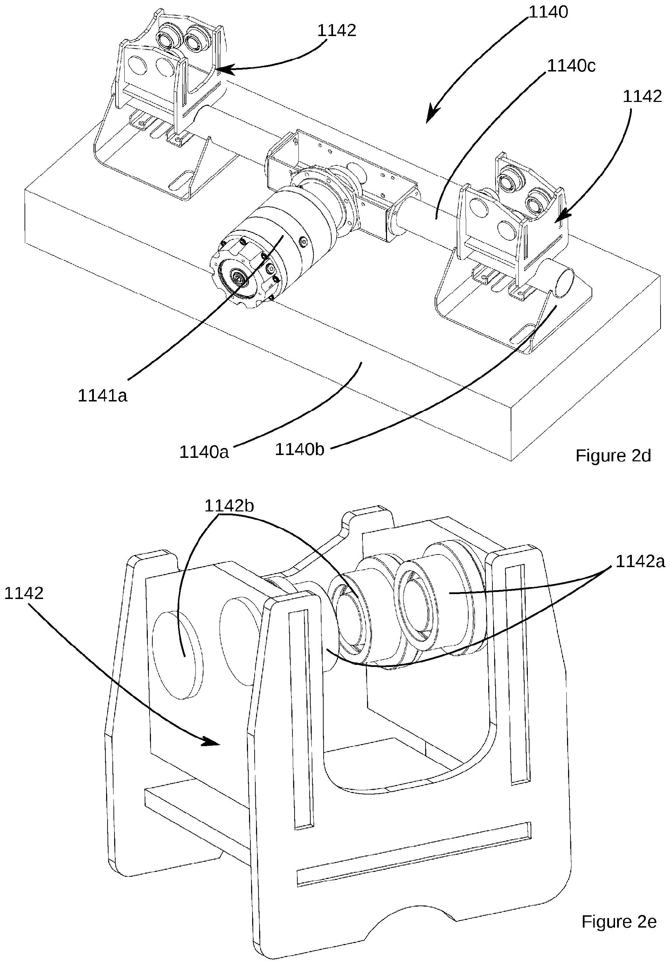

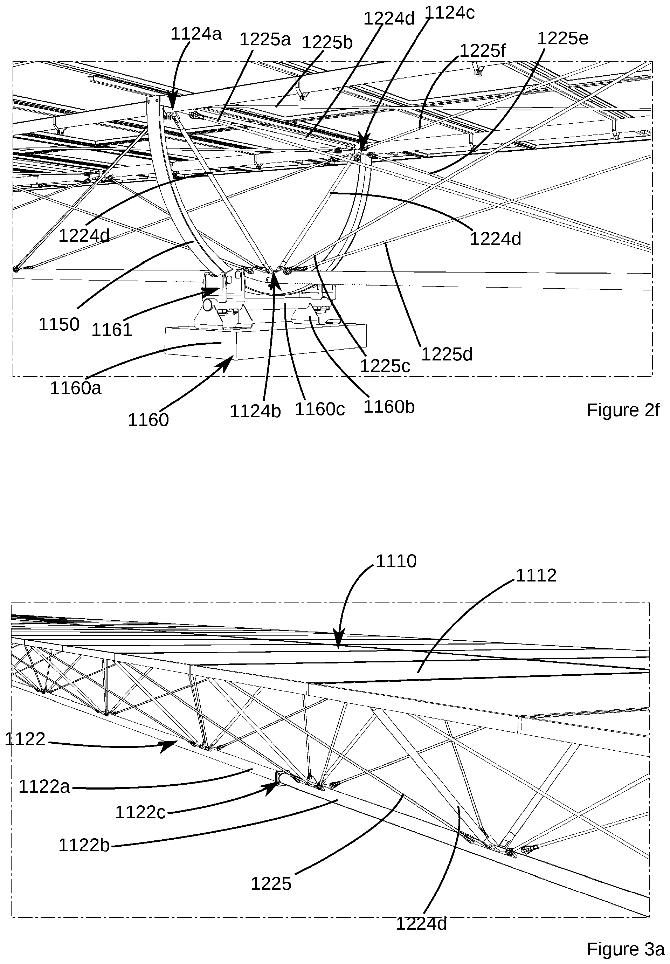

- Les figures 2a à 2f illustrent deux vues en perspectives du suiveur solaire des figures 1a et 1b selon un mode de réalisation non limitatif de la présente invention. Dans la figure 2a, la table de ce suiveur solaire est horizontale. Dans la figure 2b, la table de ce suiveur solaire est inclinée. La figure 2c représente une vue d'un premier arceau de support porté par un premier appui au sol et d'un dispositif d'entraînement cinématique en rotation. La figure 2d présente une vue d'un dispositif d'entraînement cinématique en rotation. La figure 2e illustre des galets de support montés en rotation sur un appui au sol. La figure 2f présente une vue d'un deuxième arceau de support porté par un deuxième appui au sol.

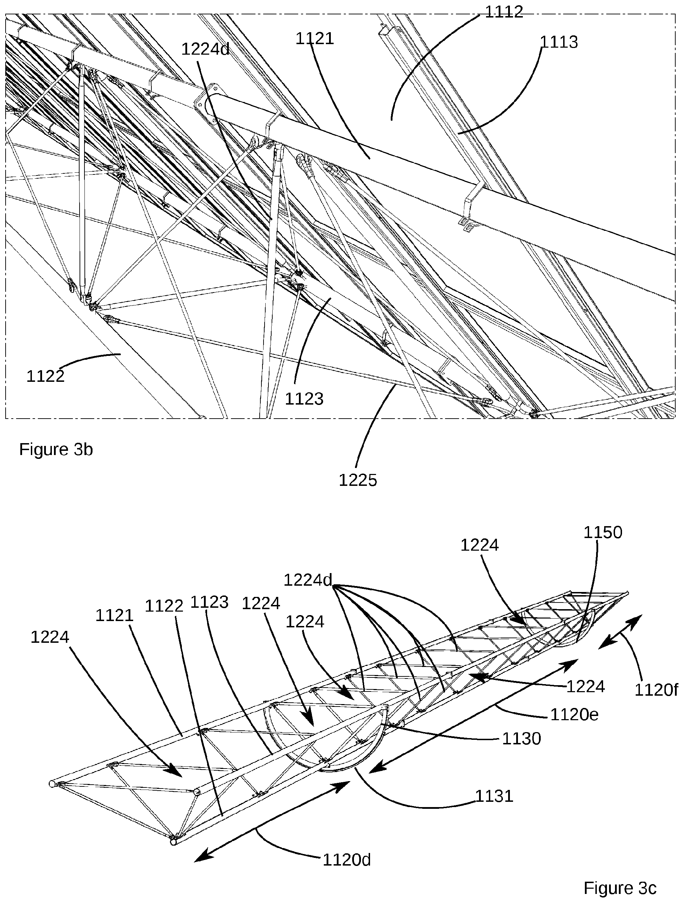

- Les figures 3a, 3b et 3c illustrent différentes vues d'un suiveur solaire selon un mode de réalisation illustré sur les figures précédentes. La figure 3a représente une vue en perspective d'une partie d'une structure de soutien du suiveur solaire. La figure 3b présente également une vue en perspective de la structure de soutien du suiveur solaire lorsque la table est inclinée. La figure 3c représente une vue en perspective d'une partie de la structure de soutien.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DETAILLEE DE L'INVENTION

Il est précisé que dans le cadre de la présente invention, le terme « dispositif de collecte d'énergie solaire », ou ses équivalents a pour définition un dispositif configuré pour convertir directement ou indirectement de l'énergie solaire en une autre forme d'énergie. Un tel dispositif peut par exemple être un panneau photovoltaïque, un réflecteur solaire, un panneau solaire thermique ou encore un concentrateur solaire par exemple.

Il est précisé que, dans le cadre de la présente invention, les termes « poutre », « structure en treillis » ou leurs équivalents ont pour définition une structure mécanique comprenant des longerons reliés par des traverses et des tirants, le tout formant une structure, de préférence triangulée, rigide. De préférence, sans que cela soit limitatif, chaque élément structurel (longeron, traverse, tirant) est configuré, conformé et positionné pour permettre à la structure en treillis de supporter une contrainte mécanique prédéterminée, typiquement sa capacité de charge maximale. De préférence, dans ce type de structure, chaque élément structurellement est indispensable pour supporter ladite capacité de charge maximale. Pour une contrainte mécanique, typiquement sa capacité de charge, toutes les traverses et de préférence tous les tirants, sont sollicitées, de préférence en traction.

Il est précisé que, dans le cadre de la présente invention, le terme « cinématique », ou ses équivalents ont pour définition l'ensemble des paramètres, caractéristiques physiques pouvant décrire un mouvement d'un corps dans un référentiel.

Avant d'entamer une revue détaillée de modes de réalisation de l'invention, sont énoncées ci-après des caractéristiques optionnelles qui peuvent éventuellement être utilisées en association ou alternativement :
- Selon un mode de réalisation, la structure en treillis comprend également au moins une pluralité de traverses réparties le long de la direction principale d'extension et reliant entre eux les premier, deuxième et troisième longerons de sorte à ce que les traverses forment une pluralité de triangles.
- De préférence au moins certains des triangles sont contenus dans un plan perpendiculaire à ladite direction principale d'extension.
- Selon un mode de réalisation, la structure en treillis comprend également une pluralité de tirants, de préférence s'étendant principalement le long de la direction principale d'extension et, contraignant mécaniquement en tension la structure de soutien en reliant mécaniquement entre eux au moins deux triangles de la pluralité de triangles.
- De préférence, le premier arceau de support et le deuxième arceau de support sont situés respectivement à une première distance L1 de la première extrémité et à une deuxième distance L3 de la deuxième extrémité de la structure de soutien de sorte à ce que la première extrémité et la deuxième extrémité de la structure de soutien soient disposées en porte-à-faux relativement au premier arceau de support et au deuxième arceau de support.
- Avantageusement, la première distance L1 et la deuxième distance L3 sont comprises entre L/9 et L/2, de préférence entre L/6 et L/2.5 et avantageusement égales à L/3, L étant la dimension de la structure de soutien selon ladite direction principale d'extension, typiquement L est la distance entre les première et deuxième extrémités. Cela permet à la structure de soutien d'être disposée en porte-à-faux relativement au premier appui au sol et au deuxième appui au sol, cela afin de répartir la charge de part et d'autre des appuis au sol. Cela permet de réduire le la flèche et le poids de la structure de soutien tout en conservant une charge et une résistance importantes aux contraintes mécaniques.
- Avantageusement, la pluralité de triangles est disposée selon une répartition irrégulière le long de ladite direction principale d'extension.
   Cela permet d'accroître la résistance mécanique de la structure de soutien à des contraintes mécaniques, par exemple des contraintes en torsion.
- Selon un mode de réalisation non limitatif, la répartition irrégulière de la pluralité de triangles le long de ladite direction principale présente une densité de triangles plus importante au niveau d'au moins un parmi le premier arceau de support et le deuxième arceau de support, de préférence au niveau du premier arceau de support.
   Cela permet d'accroître la résistance mécanique de la structure au niveau de l'arceau de support le plus proche du dispositif d'entraînement cinématique. C'est en ce point de la structure que les contraintes mécaniques sont les plus fortes lors de la mise en rotation de la structure de soutien.
- Avantageusement, la distance entre deux triangles consécutifs selon la direction principale d'extension est égale à P1 entre la première extrémité et le premier arceau de support, est égale à P3 entre le deuxième arceau de support et la deuxième extrémité, et est égale à P2 entre le premier arceau de support et le deuxième arceau de support, avec P3 étant égale à P1 et P2 étant inférieur ou égale à P1.
   Cette caractéristique technique permet d'améliorer encore plus le ratio Capacité de charge/Poids du suiveur solaire. Elle permet ainsi d'augmenter l'énergie collectée pour un coût limité.
- Avantageusement, P2 est égale à P1*(d/L2), d étant la distance selon la direction principale d'extension entre un triangle considéré et le premier arceau de support et L2 étant la distance entre le premier arceau de support et le deuxième arceau de support.
- Avantageusement, le suiveur solaire selon la présente invention comprend au moins un, de préférence au moins deux et avantageusement au moins trois triangles entre la première extrémité et le premier arceau de support.
   Cette caractéristique technique permet d'améliorer encore plus le ratio Capacité de charge/Poids du suiveur solaire. Elle permet ainsi d'augmenter l'énergie collectée pour un coût limité.
- Avantageusement, le suiveur solaire selon la présente invention comprend au moins quatre, de préférence au moins cinq et avantageusement au moins sept triangles entre le premier arceau de support et le deuxième arceau de support.
   Cette caractéristique technique permet d'améliorer encore plus le ratio Capacité de charge/Poids du suiveur solaire. Elle permet ainsi d'augmenter l'énergie collectée pour un coût limité.
- Avantageusement, la distance entre deux triangles consécutifs disposés entre le premier arceau de support et le deuxième arceau de support augmente en fonction de leur éloignement par rapport au premier arceau de support et/ au deuxième arceau de support.
   Cette caractéristique technique permet d'améliorer encore plus le ratio Capacité de charge/Poids du suiveur solaire. Elle permet ainsi d'augmenter l'énergie collectée pour un coût limité. De même, cette caractéristique technique permet d'améliorer encore plus le ratio Capacité de charge/Tenue en torsion du suiveur solaire.
- Avantageusement, au moins un, de préférence au moins deux et avantageusement au moins trois triangles de la pluralité de triangles sont situés entre le deuxième arceau de support et la deuxième extrémité.
- De préférence le premier appui au sol et le deuxième appui au sol sont ancrés ou coulées dans le sol.
- Avantageusement, le dispositif d'entraînement cinématique est disposé au niveau dudit premier appui au sol.
- Avantageusement, au moins une traverse de la pluralité de traverses est disposée relativement au premier arceau de support selon son diamètre, de préférence cette traverse définit un diamètre du premier arceau de support, et de préférence au moins une traverse de la pluralité de traverses est disposée relativement au deuxième arceau de support selon son diamètre, de préférence cette traverse définit un diamètre du deuxième arceau de support.
- Avantageusement, au moins une traverse est disposée relativement au premier arceau de support selon son diamètre.
   Cette caractéristique technique permet d'améliorer encore plus le ratio Capacité de charge/Poids du suiveur solaire. Elle permet ainsi d'augmenter l'énergie collectée pour un coût limité.
- Avantageusement, au moins une traverse est disposée relativement au deuxième arceau de support selon son diamètre.
- Avantageusement, une partie au moins des triangles s'étend dans des plans orthogonaux à la direction principale d'extension.
- Avantageusement, les triangles de la pluralité de triangles sont équilatéraux.
- Avantageusement, les triangles sont équilatéraux et les triangles s'étendent dans des plans orthogonaux à la direction principale d'extension.
   Cela permet à la structure de soutien de répartir de manière homogène les contraintes mécaniques supportées par la structure de soutien.
- Avantageusement, chaque triangle comprend :
   ∘ au moins un premier sommet disposé au niveau du premier longeron ;
   ∘ au moins un deuxième sommet disposé au niveau du deuxième longeron ;
   ∘ au moins un troisième sommet disposé au niveau du troisième longeron ;
      et chaque premier sommet d'un triangle est relié via au moins un tirant de la pluralité de tirants à au moins un deuxième sommet et à au moins un troisième sommet d'au moins un autre triangle, et de préférence au deuxième et troisième sommet de chaque triangle lui étant contigus.
      Cela permet d'augmenter la capacité de charge de la structure de soutien.
- Avantageusement, chaque deuxième sommet d'un triangle est relié via au moins un tirant à au moins un premier sommet et à au moins un troisième sommet d'au moins un autre triangle, et de préférence au premier et troisième sommet de chaque triangle lui étant contigu.
- Avantageusement, chaque troisième sommet d'un triangle est relié via au moins un tirant à au moins un premier sommet et à au moins un deuxième sommet d'au moins un autre triangle, et de préférence au premier et deuxième sommet de chaque triangle lui étant contigu.
- Avantageusement, chaque triangle comprend :
   ∘ au moins un premier sommet disposé au niveau du premier longeron ;
   ∘ au moins un deuxième sommet disposé au niveau du deuxième longeron ;
   ∘ au moins un troisième sommet disposé au niveau du troisième longeron ;
      et au moins un premier tirant relie au moins un premier sommet d'un premier triangle au deuxième sommet d'un deuxième triangle,
      et au moins un deuxième tirant relie au moins un premier sommet d'un premier triangle au troisième sommet d'un deuxième triangle,
      et au moins un troisième tirant relie au moins un deuxième sommet d'un premier triangle au premier sommet d'un deuxième triangle,
      et au moins un quatrième tirant relie au moins un deuxième sommet d'un premier triangle au troisième sommet d'un deuxième triangle,
      et au moins un cinquième tirant relie au moins un troisième sommet d'un premier triangle au premier sommet d'un deuxième triangle,
      et au moins un sixième tirant relie au moins un troisième sommet d'un premier triangle au deuxième sommet d'un deuxième triangle.
- Avantageusement, les tirants présentent des longueurs variables les uns par rapport aux autres.
- Avantageusement, une partie au moins des tirants présente des diamètres variables les uns par rapport aux autres.
- Avantageusement, la section, typiquement le diamètre d'une partie au moins des tirants est proportionnel à leurs longueurs.
- Avantageusement, la section des tirants est prise selon un plan perpendiculaire à leur dimension principale d'extension.
- Avantageusement, la longueur d'au moins un tirant disposé entre la première extrémité et le premier arceau de support est égale à la longueur T1, entre le deuxième arceau de support et la deuxième extrémité est égale à la longueur T3, et entre le premier arceau de support et le deuxième arceau de support est égale à la longueur T2, avec T3 étant égale à T1 et T2 étant inférieur ou égale à T1.
- Avantageusement, la section, typiquement le diamètre d'un tirant disposé entre la première extrémité et le premier arceau de support est égale à D1, entre le deuxième arceau de support et la deuxième extrémité est égale à D3, et entre le premier arceau de support et le deuxième arceau de support est égale à D2, avec D3 étant égale à D1 et D2 étant inférieur ou égale à D1.
- Avantageusement, une partie au moins des tirants sont solidarisés, de préférence ligaturés, deux à deux, de préférence en leurs milieux, lorsqu'ils se croisent.
- Avantageusement, la poutre formée d'une structure en treillis est continue et démontable, et de préférence transportable.
- Avantageusement, la poutre formée d'une structure en treillis est continue.
- Avantageusement, la poutre formée d'une structure en treillis est démontable.
- Avantageusement, la poutre formée d'une structure en treillis est transportable.
- Avantageusement, le premier appui au sol comprend au moins deux galets de support formant un organe de roulement et configurés pour rouler sur une bande de roulement portée par le premier arceau de support et configurés pour supporter à eux seuls et à guider le premier arceau de support et le dispositif d'entraînement cinématique comprend un organe de transmission configuré pour coopérer avec un organe de transmission complémentaire porté par le premier arceau de support de manière à permettre l'entraînement en rotation du premier arceau de support par rapport au premier appuis au sol.
   Selon un mode de réalisation l'organe de transmission porté par le dispositif d'entraînement est un pignon ou une roue dentée et l'organe de transmission porté par le premier arceau de support est une crémaillère courbe, de préférence une surface dentée qui épouse la forme du premier arceau de support.
   Selon un autre mode de réalisation, l'organe de transmission porté par le dispositif d'entraînement et l'organe de transmission porté par le premier arceau de support comprennent un ensemble de câbles avantageusement avec des renvois.
- Avantageusement, le deuxième appui au sol comprend au moins deux galets de support formant un organe de roulement et configurés pour rouler sur une bande de roulement portée par le deuxième arceau de support et configurés pour supporter à eux seuls et pour guider la rotation du deuxième arceau de support par rapport au deuxième appui au sol.
- Avantageusement, la longueur L de la structure de soutien est comprise entre 10 m et 45 m, de préférence entre 20 m et 42 m et avantageusement entre 28m et 42 m.
- Avantageusement, le premier appui au sol comprend au moins une semelle disposée au sol et au moins deux pieds solidarisés à la semelle et supportant à eux seuls les organes de roulement via une barre de rattrapage d'inclinaison montée libre en rotation autour d'un axe de rattrapage d'inclinaison perpendiculaire à la direction principale d'extension.
- Avantageusement, le deuxième appui au sol comprend au moins une semelle disposée au sol et au moins deux pieds solidarisés à la semelle et supportant à eux seuls les organes de roulement via une barre de rattrapage d'inclinaison montée libre en rotation autour d'un axe de rattrapage d'inclinaison perpendiculaire à la direction principale d'extension.
- Avantageusement, ledit au moins un dispositif de collecte d'énergie solaire comprend au moins 72 panneaux photovoltaïques nécessitant seulement 2 appuis au sol.
   Cela permet de limiter les dégradations environnementales, par exemple en limitant les travaux de terrassement nécessaires à l'installation du suiveur solaire. En effet, par exemple pour un suiveur solaire d'environ 36 mètres de longueur, le fait que celui-ci ne repose que sur deux appuis au sol concetre les travaux de terrassement au niveau de ces deux appuis au sol. De plus, l'utilisation d'uniquement deux appuis au sol permet une meilleur adaptation aux variations de pentes du sol sur lequel le suiveur solaire selon la présente invention est installé.
- Avantageusement, le dispositif mobile est pré-monté dans une usine ou dans un atelier mobile de sorte à être installable, de préférence directement, sur le premier appui au sol et sur le deuxième appui au sol une fois arrivé sur un site de production d'énergie solaire

La présente invention trouve pour domaine préférentiel d'application la réalisation de champs solaires, c'est-à-dire d'étendues comprenant une pluralité de lignes de tables comportant des dispositifs de collecte d'énergie solaire pouvant être des panneaux photovoltaïques ou bien des réflecteurs ou encore des concentrateurs solaires.

Comme il sera présenté ci-après, la présente invention résout notamment des problématiques de résistance mécanique à des contraintes mécaniques dynamiques comme le vent ou les variations de température par exemple, ainsi que d'alignement de tables sur des terrains présentant des irrégularités statiques tout en présentant un poids réduit et un coût limité.

Une première source d'irrégularités dynamiques subies par un suiveur solaire, mais non générées par le terrain lui-même, provient des dilatations thermiques que subissent les matériaux composant le suiveur solaire.

Par exemple, en milieu désertique, la température au sol peut être très élevée en journée et très basse durant la nuit. La présente invention, en plus de s'adapter aux irrégularités statiques et dynamiques du terrain, s'adapte également aux irrégularités d'ordre thermique.

De plus, le vent, généralement non négligeable dans les champs solaires, est une grande source de contrainte mécanique dès lors que l'on souhaite disposer de suiveur solaire de grandes dimensions.

Enfin, alors qu'un terrain peut présenter selon un axe Nord/Sud des dénivelés variables sur une distance plus ou moins importante relativement à une table, il peut également présenter des différences de constitution d'origine géologique voire des irrégularités dynamiques, plus ou moins importantes, responsables de tassements différentiels.

La présente invention permet de disposer d'un suiveur solaire présentant une capacité de charge importante et un poids réduit et permet l'adaptation du suiveur solaire aux contraintes environnementales statiques et dynamiques. Ce suiveur solaire tire avantageusement parti d'une structure de soutien dite en treillis dont les éléments participent, de préférence tous, à la transmission des charges et des contraintes mécaniques.

La présente invention va maintenant être décrite au travers d'une pluralité de figures servant d'illustration de mise en œuvre de la présente invention selon une pluralité de modes de réalisation. Sauf mention contraire, chacune des caractéristiques décrites en référence à un mode de réalisation donné est applicable aux autres modes de réalisation.

La figure 1a représente, selon un mode de réalisation de la présente invention, un suiveur solaire 1000 vu de profil. Ce suiveur solaire 1000 s'étend selon une direction principale d'extension 1111 de préférence sensiblement parallèle avec l'axe Nord/Sud.

Ce suiveur solaire 1000 comprend avantageusement un dispositif mobile 1100 et un premier 1140 et deuxième 1160 appuis au sol.

Ce dispositif mobile 1100 comprend de préférence une table 1110 comprenant une pluralité de dispositifs de collecte d'énergie solaire 1112.

Ce dispositif mobile 1100 comprend avantageusement une structure de soutien 1120 configurée pour supporter la table, de préférence à elle seule.

La structure de soutien 1120 présente une dimension de longueur L selon la direction principale d'extension du suiveur solaire 1000.

Cette structure de soutien 1120 présente une première extrémité 1120a et une deuxième extrémité 1120b, de préférence entre lesquelles les dispositifs de collecte d'énergie solaire 1112 sont disposés.

Selon un mode de réalisation préféré, le dispositif mobile 1100 comprend un premier arceau de support 1130 et un deuxième arceau de support 1150, chacun étant configuré pour supporter la structure de soutien 1120.

Le premier 1140 et le deuxième 1160 appuis au sol sont configurés respectivement pour supporter le premier arceau de support 1130 et le deuxième arceau de support 1150.

Selon un mode de réalisation préféré, le premier arceau de support 1130 est disposé à une distance de la première extrémité 1120a sensiblement égale à L/3, de préférence comprise entre 0.5*L/3 et 1.5*L/3.

Selon un mode de réalisation, le deuxième arceau de support 1150 est disposé à une distance de la deuxième extrémité 1120b sensiblement égale à L/3, de préférence comprise entre 0.5*L/3 et 1.5*L/3.

Da manière particulièrement avantageuse, la structure de soutien 1120 est disposée en porte-à-faux sur le premier appui au sol 1140 via le premier arceau de support 1130 et sur le deuxième appui au sol 1160 via le deuxième arceau de support 1150.

Cette disposition en porte-à-faux de la structure de soutien 1120 permet une répartition avantageuse des contraintes mécaniques supportées par la structure de soutien 1120, permettant une réduction du poids et des déformations (flèche) du dispositif mobile 1100 tout en conservant une résistance mécanique élevée.

Comme illustré dans la figure 1a, le suiveur solaire 1000 comprend un dispositif d'entraînement cinématique 1141, de préférence disposé au niveau du sol, et avantageusement au niveau du premier appui au sol. Ce dispositif d'entraînement cinématique 1141 est configuré pour entraîner en rotation la structure de soutien 1120 selon un mouvement de rotation autour d'un axe colinéaire à la direction principale d'extension 1111 du suiveur solaire 1000 de sorte à ce que la table 1110, et donc la pluralité de dispositifs de collecte d'énergie solaire 1112, puisse suivre la course du soleil dans le ciel. La figure 1b représente une vue de profil du dispositif mobile 1100 dans laquelle la table 1110 est inclinée vers l'ouest via le dispositif d'entraînement cinématique 1141.

Selon un mode de réalisation, le dispositif d'entraînement cinématique 1141 comprend une motorisation 1141a, de préférence couplée mécaniquement au premier arceau de support 1130. De manière avantageuse, ce couplage mécanique peut être réalisé par tout type de systèmes d'entrainements mécaniques par exemple un engrenage, un couple pignon/crémaillère.

Par exemple, l'axe de sortie du moteur porte un pignon qui engraine directement ou indirectement avec un profil de préférence complémentaire porté par une crémaillère courbe ou un arc de roue dentée solidaire du premier arceau. Selon un autre mode de réalisation, l'organe de transmission complémentaire comprend une chaîne qui coopère avec le pignon et qui entraîne en rotation l'arceau. Le profil complémentaire peut définir un centre de rotation confondu avec celui du premier arceau. De préférence, le profil complémentaire est porté par une face externe de l'arceau tourné au regard du sol..

Selon d'autres modes de réalisation, le dispositif d'entraînement cinématique 1141 est configuré pour coopérer avec le premier arceau de support 1130 au moyen d'un système d'entraînement par friction par exemple, ou d'un système pignon/chaîne, ou tout autre type de système d'entraînement mécanique en rotation.

De manière très avantageuse, les premier 1140 et deuxième 1160 appuis au sol comprennent des dispositifs de guidage 1142 et 1161 permettant aux premier 1130 et deuxième 1150 arceaux de support d'être guidés en rotation autour de l'axe de rotation du suiveur solaire 1000 comme illustré en figure 1b. De préférence, chacun des dispositifs de guidage 1142 et 1161 comprend des organes de roulement. Dans ces exemples illustrés, ces organes de roulement sont des galets de support 1142a, 1142b, 1161a et 1161b. Ce dispositif d'entraînement cinématique 1141 ainsi que les dispositifs de guidage 1142 et 1161 sont décrits ci-après.

Selon un mode de réalisation avantageux, les dispositifs de guidage supportent les arceaux. De préférence les galets de support supportent à eux seuls les arceaux. Ainsi, tout le poids de la structure de soutien et de la table sont mise supportés par les galets. La structure est ainsi rendue extrêmement minimaliste, ce qui permet de l'alléger et d'augmenter sa capacité de charge. Le suiveur selon ce mode de réalisation de l'invention ne comprend ainsi pas de poteau ancré dans le sol et qui supporte les arceaux.

La structure de soutien 1120 comprend de manière particulièrement avantageuse au moins trois longerons 1121, 1122 et 1123 (voire quatre selon un mode de réalisation non préférentiel) chacun d'eux s'étendant de manière colinéaire selon la direction principale d'extension 1111, et de préférence étant parallèles entre eux.

Cette structure de soutien 1120 comprend également des traverses 1224d réparties le long des trois longerons 1121, 1122 et 1123 et étant configurées pour relier mécaniquement chacun des trois longerons 1121, 1122 et 1123 deux à deux.

De préférence, les traverses 1224d sont disposées relativement aux trois longerons 1121, 1122 et 1123 de sorte à former des triangles 1224 parallèles entre eux, de préférence s'étendant dans des plans orthogonaux à la direction principale d'extension 1111.

De manière particulièrement avantageuse, la densité de triangles 1224 est supérieure au niveau du premier arceau de support 1130 relativement au deuxième arceau de support 1150, cela afin d'augmenter la résistance mécanique de la structure de soutien 1120 au niveau du premier arceau de support 1130 porté par le premier appui au sol 1140 comprenant le dispositif d'entraînement cinématique 1141. Ces triangles 1224 seront décrits plus précisément dans la suite de la description

Comme illustré sur cette figure et selon un mode de réalisation préféré, la structure de soutien 1120 comprend des tirants 1225. Ces tirants 1225 sont disposés de sorte à relier les triangles 1224 entre eux, de préférence deux à deux. Ces tirants 1225 sont avantageusement contraints en tension de manière à accroître la résistance mécanique de la structure de soutien 1120.

De préférence, deux tirants 1225 se croisant sensiblement en leur milieu sont ligaturés l'un à l'autre.

La figure 1b, comme précédemment précisé, représente un suiveur solaire 1000 selon un mode de réalisation de la présente invention, dont la table 1110 est inclinée vers l'ouest, cela afin de suivre la course du soleil dans le ciel. Cette inclinaison est rendue possible par l'utilisation des arceaux de support 1130 et 1150 configurés pour être animés d'un mouvement de rotation par le dispositif d'entraînement cinématique 1141 et reposant sur des galets de support 1142a, 1142b, 1161a et 1161b. Ces divers éléments seront décrits plus avant au travers des figures suivantes.

La figure 2a représente une vue en perspective d'un suiveur solaire 1000 selon un mode de réalisation. On notera sur cette figure la disposition relative des longerons 1121, 1122 et 1123, ainsi que du premier arceau de support 1130 et du deuxième arceau de support 1150.

Sur cette figure, on retrouve le premier appui au sol 1140 comprenant le dispositif d'entraînement cinématique 1141.

Avantageusement, ce dispositif d'entraînement cinématique 1141 est monté sur une barre de rattrapage d'inclinaison 1140c définissant un axe de rattrapage d'inclinaison 1141c perpendiculaire à l'axe de rotation principal 1141b du dispositif d'entraînement cinématique 1141. Cet axe de rattrapage d'inclinaison 1141c est porté par le premier appui au sol 1140 de telle manière que le dispositif d'entraînement cinématique 1141 et de préférence le premier arceau de support 1130 sont mobiles relativement à cet axe de rattrapage d'inclinaison 1141c permettant ainsi l'adaptation de la structure de soutien 1120 en partie au moins à une partie des irrégularités statiques, mais aussi dynamiques du sol, de la température, voire du vent.

Sur cette figure, la structure de soutien 1120 comprend de manière particulièrement avantageuse, un premier longeron 1121, un deuxième longeron 1122 et un troisième longeron 1123, chacun d'eux s'étendant de manière colinéaire selon la direction principale d'extension 1111, et de préférence étant parallèles entre eux.

Comme précédemment indiqué, les traverses 1224d sont disposées relativement aux longerons 1121, 1122 et 1123 de sorte à former des triangles 1224 dont les sommets 1224a, 1224b, 1224c sont portés au moins en partie par les longerons 1121, 1122 et 1123. Ainsi trois traverses 1224d relient les trois longerons 1121, 1122 et 1123 de manière à former un triangle 1224, de préférence équilatéral.

Avantageusement, ces triangles 1224 présentent des dimensions leur permettant d'être inscrits dans le premier arceau de support 1130 et/ou dans le deuxième arceau de support 1150.

Selon un mode de réalisation, au moins une traverse 1224d est disposée relativement au premier arceau de support 1130 de sorte en définir son diamètre. De manière avantageuse, au moins une partie des triangles 1224 est inscrite dans le premier et/ou dans le deuxième arceau de support 1150.

Selon un autre mode de réalisation, au moins une traverse 1224d est disposée relativement au deuxième arceau de support 1150 de sorte en définir son diamètre.

De préférence, le premier arceau de support 1130 est solidarisé au premier longeron 1121 au niveau d'une extrémité du premier arceau de support 1130, et avantageusement, la distance entre le premier longeron 1121 et cette extrémité du premier arceau de support 1130 est inférieur ou égale à 0.1 fois le diamètre du premier arceau de support 1130, de préférence à 0.1 fois la longueur de la traverse 1224d reliant le premier longeron 1121 au troisième longeron 1123.

De préférence, le deuxième arceau de support 1150 est solidarisé au premier longeron 1121 au niveau d'une extrémité du deuxième arceau de support 1150, et avantageusement, la distance entre le premier longeron 1121 et cette extrémité du deuxième arceau de support 1150 est inférieur ou égale à 0.1 fois le diamètre du deuxième arceau de support 1150, de préférence à 0.1 fois la longueur de la traverse 1224d reliant le premier longeron 1121 au troisième longeron 1123.

Sur cette figure, on retrouve également, de manière plus détaillée, les tirants 1225. Comme indiqué précédemment, les tirants 1225 relient les sommets 1224a, 1224b et 1224c d'un triangle 1224 aux deux triangles qui lui sont contigus. De préférence, les tirants 1225 relient entre eux les sommets des triangles contigus les uns aux autres.

Ainsi, par exemple, un tirant 1225 relie le premier sommet 1224a d'un triangle 1224 au deuxième sommet 1224b d'un autre triangle, et un autre tirant 1225 relie ce premier sommet 1224a au troisième sommet 1224c de l'autre triangle.

Avantageusement, chaque sommet d'un triangle 1224 est relié à deux sommets d'un autre triangle 1224 contigu, et de préférence à deux sommets de deux autres triangles 1224 contigus.

Selon un mode de réalisation, ces tirants 1225 sont assemblés avec une précontrainte, de préférence en traction, de sorte à assurer un renforcement mécanique de la structure de soutien 1120, permettant d'augmenter la capacité de charge de la structure de soutien 1120 sans accroître de manière significative son poids.

Les figures 2b et 2c représentent le suiveur solaire 1000 incliné selon l'ouest comme dans la figure 1b. Sur la figure 2b, on notera la disposition relative du premier arceau de support 1130 et du premier appui au sol 1140, ainsi que celle du deuxième arceau de support 1150 et du deuxième appui au sol 1160.

On remarque sur la figure 2b que le deuxième longeron 1122 peut présenter une longueur inférieure à celles du premier longeron 1121 et du troisième longeron 1123.

Cette figure 2b illustre également la disposition en porte-à-faux de la structure de soutien 1120 relativement au premier 1140 et au deuxième 1160 appuis au sol.

La figure 2c illustre de manière plus précise le couplage mécanique entre le premier arceau de support 1130 et le premier appui au sol 1140 via le dispositif d'entraînement cinématique 1141 et deux dispositifs de guidage 1142 comprenant au moins un galet supérieur de support 1142a et au moins un galet inférieur de support 1142b.

On note sur cette figure 2c la présence avantageuse d'une bande de roulement 1131 disposée sur la surface externe du premier arceau de support 1130 selon un mode de réalisation.

Par exemple, la section d'un arceau de support, prise selon une coupe radiale, présente une forme de « T » inversé. Le dessus de la barre du « T », tourné vers le sol, porte le profil configuré pour engrener avec le dispositif d'entraînement cinématique 1141. Le dessus de la barre du « T », porte également des bandes de roulement externes sur lesquelles les galets inférieurs de support 1142b sont destinés à rouler. Le dessous de la barre du « T », porte des bandes de roulements internes sur lesquelles les galets supérieurs de support 1142a sont destinés à rouler. De préférence, les bandes de roulements internes et externes sont disposées au droit l'une de l'autre. Ainsi, chaque arceau de support 1130 et 1150 comprend quatre bandes de roulement. Chaque arceau de support 1130 et 1150 est configuré pour coopérer avec deux dispositifs de guidage, respectivement 1142 et 1161. Comme illustré en figure 2e, chaque dispositif de guidage 1142 et 1161, comporte quatre galets de support 1142a, 1142b, 1161a et 1161b qui roulent chacun sur l'une des bandes de roulement de l'arceau de support 1130 et 1150. Ainsi, deux galets de support 1142a, 1142b qui se font face enserrent l'arceau de support entre eux. Cette configuration particulière permet d'améliorer la précision du guidage et le transfert du poids de la table 1110 vers l'appui au sol 1140 et 1160.

La figure 2d représente le premier appui au sol 1140 comprenant la barre de rattrapage d'inclinaison 1140c définissant l'axe de rattrapage d'inclinaison 1141c. Comme précédemment indiqué, cet axe de rattrapage d'inclinaison 1141c permet au suiveur solaire 1000 de compenser en partie au moins certaines irrégularités statiques et/ou dynamiques.

Comme illustré sur ce mode de réalisation, le premier appui au sol 1140 comprend une semelle 1140a, de préférence en béton, de préférence ancrée dans le sol ou posée sur le sol.

Deux pieds 1140b sont posés sur une face supérieure de la semelle 1140a. Selon le mode de réalisation illustré, les pieds 1140b présentent sensiblement une forme de « U » dont le fond présente des ouvertures pour recevoir des vis de fixation du pied 1140b sur la semelle 1140a. Chaque pied 1140b supporte, de préférence à lui seul, un dispositif de guidage 1142.

Sur l'exemple illustré en figure 2d, l'appui au sol 1140 comprend également une barre de rattrapage d'inclinaison 1140c qui relie les deux pieds 1140b et qui définit l'axe de rattrapage d'inclinaison 1141c.

De manière avantageuse, la barre de rattrapage d'inclinaison 1140c, les pieds 1140b et le dispositif de guidage 1142 permettent une liaison pivot dans la direction transversale (perpendiculaire à la direction d'extension principale) du dispositif mobile 1100. Ce degrés de liberté en rotation permet de réduire voire de supprimer les contraintes mécaniques au niveau du dispositif d'entraînement cinématique 1141 en s'adaptant aux défauts de planéité locaux du terrain. Cela permet par ailleurs le pré-montage du dispositif mobile 1100 en atelier avant son installation sur le site de production d'énergie solaire sans réglages additionnels de la mécanique.

Avantageusement, la barre de rattrapage d'inclinaison 1140c a pour fonction de transmettre les efforts entre les deux pieds 1140b. Dans le cas du premier appui au sol, qui comprend la motorisation 1141a, cette barre de rattrapage d'inclinaison 1140c a aussi pour fonction de supporter cette motorisation 1141a. La barre de rattrapage d'inclinaison 1140c comprend par exemple deux portions d'extrémité, tubulaires, de section circulaire, chacune fixée un support de motorisation située entre les deux portions d'extrémité. Le moteur est fixé sur ce support de motorisation. De préférence, l'arbre de sortie du moteur, qui comprend un pignon, forme saillie au-delà support de motorisation afin d'être accessible par le profil complémentaire porté par le premier arceau.

Selon un mode de réalisation préféré, cette barre de rattrapage d'inclinaison 1140c est montée libre en rotation autour de l'axe de rattrapage d'inclinaison 1141c sur les deux pieds 1140b.

Avantageusement, chaque dispositif de guidage 1142 est solidarisé à la barre de rattrapage d'inclinaison 1140c de sorte à être mobile en rotation autour de l'axe de rattrapage d'inclinaison 1141c en même temps que la barre de rattrapage d'inclinaison 1140c. Il peut en être de même pour le dispositif d'entraînement cinématique 1141. Cela permet alors, via une légère rotation autour de l'axe de rattrapage d'inclinaison, de compenser certaines irrégularités du sol par exemple, comme un dénivelé entre chacun des appuis au sol.

Selon un autre mode de réalisation, la barre de rattrapage d'inclinaison 1140c est montée fixe sur les deux pieds 1140b, via par exemple une soudure, et ceux sont les dispositifs de guidage 1142 et le dispositif d'entraînement cinématique qui sont eux montés libre en rotation autour l'axe de rattrapage d'inclinaison 1141c.

Selon encore un autre mode de réalisation, la barre de rattrapage d'inclinaison 1140c, les dispositifs de guidage 1142 et le dispositif d'entraînement cinématique sont tous montés libres en rotation autour de l'axe de rattrapage d'inclinaison 1141c.

De manière avantageuse, ces éléments peuvent être montés libres en rotation lors de l'installation du suiveur solaire afin de compenser des irrégularités statiques du sol, puis solidarisé entre eux via une soudure par exemple.

Selon un autre mode de réalisation plus avantageux encore, ces éléments sont laissés montés libres en rotation autour de l'axe de rattrapage d'inclinaison 1141cde sorte à permettre une adaptation du suiveur solaire à des irrégularités du sol dynamiques.

Sur cette figure 2d, les deux premiers dispositifs de guidage 1142 sont représentés. Ils sont de préférence montés de part et d'autre du dispositif d'entraînement cinématique 1141. Ils sont avantageusement montés en rotation sur l'axe de rattrapage d'inclinaison 1141c.

La figure 2f représente le deuxième appui au sol 1160 supportant le deuxième arceau de support 1150 et comportant les deuxièmes dispositifs de guidage 1161. On note que le deuxième appui au sol 1160 comprend également un axe de rattrapage d'inclinaison 1161c perpendiculaire à la direction principale d'extension 1111 de manière identique au premier appui au sol 1140, et ayant un rôle identique de compensation en partie au moins de certaines irrégularités statiques et/ou dynamiques.

De préférence, les premier 1140 et deuxième 1160 appuis au sol sont identiques à l'exception du dispositif d'entraînement cinématique 1141 qui occupe le premier appui au sol 1140.

Ainsi on retrouve également sur le deuxième appui au sol 1160 une semelle 1160a, de préférence en béton, de préférence ancrée dans le sol ou posée sur le sol, deux pieds 1160b posés sur une face supérieure de la semelle 1160a, chaque pied 1160b supportant, de préférence à lui seul, un dispositif de guidage 1161.

Sur cette figure 2f sont clairement visibles les tirants 1225 reliant les sommets des triangles 1224. On remarque ainsi le premier sommet 1224a d'un premier triangle disposé au niveau du premier longeron 1121, le deuxième sommet 1224b du premier triangle disposé au niveau du deuxième longeron 1122 et le troisième sommet 1224c du premier triangle disposé au niveau du troisième longeron 1123.

De manière avantageuse, un premier tirant 1225a relie le premier sommet 1224a du premier triangle au deuxième sommet d'un deuxième triangle et un deuxième tirant 1225b relie le premier sommet 1224a du premier triangle au troisième sommet du deuxième triangle.

De même, un troisième tirant 1225c relie le deuxième sommet 1224b du premier triangle au premier sommet du deuxième triangle et un quatrième tirant 1225d relie le deuxième sommet 1224b du premier triangle au troisième sommet du deuxième triangle.

Enfin, un cinquième tirant 1225e relie le troisième sommet 1224c du premier triangle au premier sommet du deuxième triangle et un sixième tirant 1225f relie le troisième sommet 1224c du premier triangle au deuxième sommet du deuxième triangle.

Cette utilisation avantageuse de tirants 1225 permet d'accroître la résistance mécanique de la structure de soutien 1120 et donc d'augmenter sa capacité de charge.

Les figures 3a et 3b représentent des vues en perspective d'une partie du suiveur solaire 1000 selon un mode de réalisation. Sur cette figure, on note que les longerons 1121, 1122 et 1123 peuvent comprendre plusieurs sections et sont ainsi démontables et transportables aisément.

On remarque également que les sommets 1224a, 1224b et 1224c de chaque triangle 1224 définissent une zone où les tirants 1225 sont solidarisés aux longerons 1121, 1122 et 1123.

De préférence, chaque sommet 1224a, 1224b et 1224c est formée d'une partie d'un longeron 1121, 1122 et 1123, de zones de solidarisation de deux traverses 1224d et de zones de solidarisation de quatre tirants 1225.

Un sommet d'un triangle 1224 peut ainsi être défini comme comprenant deux traverses 1224d s'étendant vers les deux autres sommets du même triangle 1224 et quatre tirants 1225 s'étendant vers quatre sommets de deux autres triangles.

On note également sur la figure 3b que les dispositifs de collectes d'énergie solaire 1112 sont solidarisés au premier 1121 et troisième 1123 longerons via des poutrelles 1113.

La figure 3c représente la structure de soutien 1120 sans les tirants 1225 et comprenant uniquement les longerons 1121, 1122 et 1123, les traverses 1224d et les premier 1130 et deuxième 1150 arceaux de support. On remarque sur cette figure que les triangles situés aux extrémités de la structure de soutien 1120 sont de préférence inclinés relativement aux autres triangles de la structure de soutien 1120, de préférence étant tous parallèles entre eux.

Selon un mode de réalisation avantageux, le premier appui au sol 1140 et le deuxième appui au sol 1160 sont formés sur un site de production d'énergie solaire et le dispositif mobile 1100 peut être, de préférence intégralement, assemblé dans une usine, voire dans un atelier mobile, de sorte à former un ensemble complet de préférence monobloc. Ce dispositif mobile 1100 pré-assemblé peut alors être, de préférence directement, installé sur le premier appui au sol 1140 et sur le deuxième appui au sol 1160 une fois arrivé sur le site de production d'énergie solaire. En effet, le suiveur solaire 1000 selon la présente invention tire avantageusement partie de son adaptabilité mécanique aux irrégularités statiques et/ou dynamiques du sol et de l'environnement du site de production, lui permettant d'être pré-monté avant son arrivé sur le site de production afin d'être installé aisément et rapidement sur les deux appuis au sol 1140 et 1160. Cela permet, entres autres, un gain de temps et d'argent important dans la construction de chams solaires. Au besoin, on ajustera l'inclinaison des dispositifs de guidage 1142, 1161 par rapport aux appuis au sol 1140, 1160 pour compenser les défauts de planéité du terrain.

Nous allons à présent présenter, à titre d'exemple non limitatif, les matériaux, les valeurs numériques et les dimensions qui peuvent être adaptées aux différents éléments de la présente invention :
- Les longerons comprennent au moins un des matériaux suivants : acier, aluminium, composite;
- Les traverses comprennent au moins un des matériaux suivants : acier, aluminium, composite;
- Les tirants comprennent au moins un des matériaux suivants : acier ;
- Les arceaux de support comprennent au moins un des matériaux suivants : acier ;
- La distance L entre la première extrémité et la deuxième extrémité de la structure de soutien est comprise de préférence entre 0 m et 45 m, de préférence entre 10 m et 42 m et avantageusement entre 20 m et 37 m ;
- La distance L1 entre la première extrémité de la structure de soutien et le premier arceau de support est comprise entre 0m et 6m, de préférence entre 1m et 6m et avantageusement entre 1m et 3m ;
- La distance L2 entre le premier arceau de support et le deuxième arceau de support est comprise entre 0m et 42m, de préférence entre 1m et 36m et avantageusement entre 1m et 24m ;
- La distance L3 entre le deuxième arceau de support et la deuxième extrémité de la structure de soutien est comprise entre 0m et 6m, de préférence entre 1m et 6m et avantageusement entre 1m et 3m ;
- La première distance P1 entre deux triangles consécutifs disposés entre la première extrémité de la structure de soutien et le premier arceau de support est comprise entre 1m et 6m ;
- La deuxième distance P2 entre deux triangles consécutifs disposés entre le premier arceau de support et le deuxième arceau de support est comprise entre 1m et 6m ;
- La troisième distance P3 entre deux triangles consécutifs disposés entre le deuxième arceau de support et la deuxième extrémité de la structure de soutien est comprise entre 1m et 6m ;

La présente invention concerne ainsi un suiveur solaire comprenant une structure de soutien tirant partie avantageusement de la mécanique des poutres dite en treillis, c'est-à-dire des structures mécaniques configurées pour supporter une contrainte mécanique prédéterminée et dont chaque élément est à la fois conformé et disposé de manière à ce que la structure de soutien ainsi formée puisse supporter la contrainte mécanique prédéterminée tout en présentant le poids le plus réduit possible.

Au vu de la description qui précède, il apparaît clairement que l'invention propose une solution efficace pour augmenter la surface de collecte d'énergie solaire pour des suiveurs solaires adaptés à des terrains accidentés et tout en présentant des quantités de matière minimum inférieures à la moyenne, des matières et des coûts limités

L'invention n'est pas limitée aux modes de réalisation décrits, mais s'étend à tout mode de réalisation entrant dans la portée des revendications.

1000. Suiveur solaire
1100. Dispositif mobile
1110. Table
   1111. Direction principale d'extension 1112. Dispositif de collecte d'énergie solaire 1113. Poutrelle
1120. Structure de soutien
   1120a. Première extrémité
   1120b. Deuxième extrémité
   1120c. Distance entre la première extrémité et la deuxième extrémité : L
   1120d. Distance entre la première extrémité et le premier arceau de support : L1
   1120e. Distance entre le premier arceau de support et le deuxième arceau de support : L2
   1120f. Distance entre le deuxième arceau de support et la deuxième extrémité : L3
   1121. Premier longeron
   1122. Deuxième longeron
   1123. Troisième longeron
   1224. Triangle
      1224a. Premier sommet
      1224b. Deuxième sommet
      1224c. Troisième sommet
      1224d. Traverse
      1224e. Première distance entre deux triangles consécutifs : P1
      1224f. Deuxième distance entre deux triangles consécutifs : P2
      1224g. Troisième distance entre deux triangles consécutifs : P3
   1225. Tirant
      1225a. Premier tirant
      1225b. Deuxième tirant
      1225c. Troisième tirant
      1225d. Quatrième tirant
      1225e. Cinquième tirant
      1225f. Sixième tirant
1130. Premier arceau de support
   1131. Bande de roulement
1140. Premier appui au sol
   1140a. Semelle
   1140b. Pied
   1140c. Barre de rattrapage d'inclinaison
   1141. Dispositif d'entraînement cinématique
      1141a. Motorisation
      1141b. Axe de rotation principal
      1141c. Axe de rattrapage d'inclinaison
   1142. Premier dispositif de guidage
      1142a. Galet(s) supérieur(s) de support
      1142b. Galet(s) inférieur(s) de support
1150. Deuxième arceau de support
   1151. Bande de roulement
1160. Deuxième appui au sol
   1160a. Semelle
   1160b. Pied
   1160c. Barre de rattrapage d'inclinaison
   1161. Deuxième dispositif de guidage
      1161a. Galet(s) supérieur(s) de support
      1161b. Galet(s) inférieur(s) de support

## Revendications

1. Suiveur solaire (1000) comprenant au moins :
• un dispositif mobile (1100) comprenant au moins :
∘ une table (1110) s'étendant longitudinalement selon une direction principale d'extension (1111) et comprenant au moins un dispositif de collecte d'énergie solaire (1112) ;
∘ une structure de soutien (1120) s'étendant longitudinalement sur une longueur L (1120c) selon la direction principale d'extension (1111) et supportant la table (1110) et comprenant une première extrémité (1120a) et une deuxième extrémité (1120b) ;
∘ un premier arceau de support (1130) et un deuxième arceau de support (1150) configurés pour supporter la structure de soutien (1120) ;
• un premier appui au sol (1140) et un deuxième appui au sol (1160) configurés pour supporter respectivement le premier arceau de support (1130) et le deuxième arceau de support (1150) ;
• un dispositif d'entraînement cinématique (1141) configuré pour entraîner en rotation le dispositif mobile (1100) par rapport au premier appui au sol (1140) et au deuxième appui au sol (1160) ;
le suiveur solaire (1000) étant **caractérisé en ce que** la structure de soutien (1120) est une poutre formée d'une structure en treillis rigide comprenant des longerons (1121, 1122, 1123) reliés par des traverses (1224d) et des tirants (1225).

2. Suiveur solaire (1000) selon la revendication 1, dans lequel ladite structure de soutien (1120) comporte :
∘ au moins un premier (1121), un deuxième (1122) et un troisième (1123) longerons parallèles entre eux et s'étendant selon la direction principale d'extension (1111) ;
∘ une pluralité de traverses (1224d) répartie le long de la direction principale d'extension (1111) et reliant entre eux les premier, deuxième, et troisième longerons (1121, 1122, 1123) de sorte à ce que les traverses (1224d) forment une pluralité de triangles (1224) ;
∘ une pluralité de tirants (1225) reliant mécaniquement entre eux au moins deux triangles (1224) de la pluralité de triangles (1224) .

3. Suiveur solaire (1000) selon la revendication 2, dans lequel ladite pluralité de tirants (1225) contraint mécaniquement en tension la structure de soutien (1120).

4. Suiveur solaire (1000) selon l'une quelconque des revendications 2 ou 3, dans lequel le premier arceau de support (1140) et le deuxième arceau de support (1160) sont situés respectivement à une première distance L1 (1120d) de la première extrémité (1120a) et à une deuxième distance L3 (1120f) de la deuxième extrémité (1120b) de la structure de soutien (1120) de sorte à ce que la première extrémité (1120a) et la deuxième extrémité (1120b) de la structure de soutien (1120) soient disposées en porte-à-faux relativement au premier arceau de support (1130) et au deuxième arceau de support (1150).

5. Suiveur solaire (1000) selon la revendication 4, dans lequel la première distance L1 (1120d) et la deuxième distance L3 (1120f) sont comprises entre L/9 et L/2, de préférence entre L/6 et L/2.5 et avantageusement égales à L/3.

6. Suiveur solaire (1000) selon l'une quelconque des revendications 2 à 5, dans lequel la pluralité de triangles (1124) est disposée selon une répartition irrégulière le long de ladite direction principale d'extension (1111), et de préférence dans lequel la répartition irrégulière de la pluralité de triangles (1124) le long de ladite direction principale (1111) présente une densité de triangles (1124) plus importante au niveau d'au moins un parmi le premier arceau de support (1130) et le deuxième arceau de support (1150), de préférence au niveau du premier arceau de support (1130).

7. Suiveur solaire (1000) selon l'une quelconque des revendications 2 à 6, dans lequel la distance entre deux triangles (1224) consécutifs selon la direction principale d'extension (1111) est égale à P1 (1224e) entre la première extrémité (1120a) et le premier arceau de support (1130), est égale à P3 (1224g) entre le deuxième arceau de support (1150) et la deuxième extrémité (1120b), et est égale à P2 (1224f) entre le premier arceau de support (1130) et le deuxième arceau de support (1150), avec P3 étant égale à P1 et P2 étant inférieur ou égale à P1.

8. Suiveur solaire (1000) selon l'une quelconque des revendications 2 à 7, comprenant au moins quatre, de préférence au moins cinq et avantageusement au moins sept triangles (1224) entre le premier arceau de support (1130) et le deuxième arceau de support (1150).

9. Suiveur solaire (1000) selon la revendication 8, dans lequel la distance entre deux triangles (1224) consécutifs disposés entre le premier arceau de support (1130) et le deuxième arceau de support (1150) augmente en fonction de leur éloignement par rapport au premier arceau de support (1130).

10. Suiveur solaire (1000) selon l'une quelconque des revendications 2 à 9, dans lequel au moins une traverse (1224d) est disposée relativement au premier arceau de support (1130) selon son diamètre, et dans lequel de préférence au moins une traverse (1224d) est disposée relativement au deuxième arceau de support (1150) selon son diamètre.

11. Suiveur solaire selon l'une quelconque des revendications 2 à 10, dans lequel les triangles (1224) sont équilatéraux et dans lequel les triangles (1224) s'étendent dans des plans orthogonaux à la direction principale d'extension (1111).

12. Suiveur solaire (1000) selon l'une quelconque des revendications 2 à 11 dans lequel chaque triangle (1224) comprend :
• au moins un premier sommet (1224a) disposé au niveau du premier longeron (1121) ;
• au moins un deuxième sommet (1224b) disposé au niveau du deuxième longeron (1122) ;
• au moins un troisième sommet (1224c) disposé au niveau du troisième longeron (1123) ;
et dans lequel chaque premier sommet (1224a) d'un triangle (1224) est relié via au moins un tirant (1225) à au moins un deuxième sommet (1224b) et à au moins un troisième sommet (1224c) d'au moins un autre triangle (1224).

13. Suiveur solaire (1000) selon la revendication 12, dans lequel chaque deuxième sommet (1224b) d'un triangle (1224) est relié via au moins un tirant (1225) à au moins un premier sommet (1224a) et à au moins un troisième sommet (1224c) d'au moins un autre triangle (1224).

14. Suiveur solaire (1000) selon l'une quelconque des revendications 12 ou 13, dans lequel chaque troisième sommet (1224c) d'un triangle (1224) est relié via au moins un tirant (1225) à au moins un premier sommet (1224a) et à au moins un deuxième sommet (1224b) d'au moins un autre triangle (1224).

15. Suiveur solaire (1000) selon l'une quelconque des revendications 2 à 14, dans lequel la section, typiquement le diamètre d'une partie au moins des tirants (1225), est proportionnel à leurs longueurs.

16. Suiveur solaire (1000) selon l'une quelconque des revendications précédentes, dans lequel le dispositif mobile (1100) est configuré de manière à ce que la structure de soutien (1120) soit intégralement supportée par le premier arceau de support (1130) et le deuxième arceau (1150) de support.

17. Suiveur solaire (1000) selon l'une quelconque des revendications précédentes, comprenant en outre des organes de roulement montés en rotation sur le premier appui au sol (1140) et le deuxième appui au sol (1160), les organes de roulement étant configurés de manière à guider en rotation le premier arceau (1130) et le deuxième arceau (1150) et à supporter à eux seuls le dispositif mobile (1100)

18. Suiveur solaire (1000) selon la revendication 17, dans lequel le premier appui au sol (1140) comprend au moins deux galets de support (1142a, 1142b) formant un organe de roulement et configurés pour rouler sur une bande de roulement (1131) portée par le premier arceau de support (1130) et configurés pour supporter à eux seuls et à guider le premier arceau de support (1130) et dans lequel le dispositif d'entraînement cinématique (1141) comprend un organe de transmission configuré pour coopérer avec un organe de transmission complémentaire porté par le premier arceau de support (1130) de manière à permettre l'entraînement en rotation du premier arceau de support (1130) par rapport au premier appui au sol (1140), et dans lequel le deuxième appui au sol (1160) comprend au moins deux galets de support (1161a, 1161b) formant un organe de roulement et configurés pour rouler sur une bande de roulement (1151) portée par le deuxième arceau de support (1150) et configurés pour supporter à eux seuls et pour guider la rotation du deuxième arceau de support (1150) par rapport au deuxième appui au sol (1160).

19. Suiveur solaire (1000) selon l'une quelconque des revendications 17 ou 18, dans lequel le premier appui au sol (1140) comprend au moins une semelle (1140a) disposée au sol et au moins deux pieds (1140b) solidarisés à la semelle (1140a) et supportant à eux seuls les organes de roulement via une barre de rattrapage d'inclinaison (1140c) montée libre en rotation autour d'un axe de rattrapage (1141c) d'inclinaison perpendiculaire à la direction principale d'extension (1111), et dans lequel le deuxième appui au sol (1160) comprend au moins une semelle (1160a) disposée au sol et au moins deux pieds (1160b) solidarisés à la semelle (1140a) et supportant à eux seuls les organes de roulement via une barre de rattrapage d'inclinaison (1160c) montée libre en rotation autour d'un axe de rattrapage d'inclinaison (1161c) perpendiculaire à la direction principale d'extension (1111).

20. Champ solaire comprenant une pluralité de suiveurs solaires (1000) selon l'une quelconque des revendications précédentes, au moins certains des suiveurs solaires (1000) étant disposés parallèlement les uns aux autres, de préférence selon la direction Nord/Sud.

## Patentansprüche

1. Solarnachführer (1000), umfassend mindestens:
• eine bewegliche Vorrichtung (1100), umfassend mindestens:
∘ einen Tisch (1110), der sich längs gemäß einer Haupterstreckungsrichtung (1111) erstreckt und mindestens eine Solarenergiesammelvorrichtung (1112) umfasst;
∘ eine Stützstruktur (1120), die sich längs über eine Länge L (1120c) gemäß der Haupterstreckungsrichtung (1111) erstreckt und den Tisch (1110) stützt und ein erstes Ende (1120a) und ein zweites Ende (1120b) umfasst;
∘ einen ersten Stützbogen (1130) und einen zweiten Stützbogen (1150), die ausgelegt sind, um die Stützstruktur (1120) zu stützen;
• eine erste Bodenabstützung (1140) und eine zweite Bodenabstützung (1160), die ausgelegt sind, um jeweils den ersten Stützbogen (1130) und den zweiten Stützbogen (1150) zu stützen;
• eine kinematische Antriebsvorrichtung (1141), die ausgelegt ist, um die bewegliche Vorrichtung (1100) in Bezug auf die erste Bodenabstützung (1140) und die zweite Bodenabstützung (1160) rotatorisch anzutreiben;
wobei der Solarnachführer (1000) **dadurch gekennzeichnet ist, dass** die Stützstruktur (1120) ein Balken ist, der von einer starren Gitterstruktur gebildet ist, umfassend Längsträger (1121, 1122, 1123), die durch Querträger (1224d) und Zugstangen (1225) verbunden sind.

2. Solarnachführer (1000) nach Anspruch 1, wobei die Stützstruktur (1120) aufweist:
∘ mindestens einen ersten (1121), einen zweiten (1122) und einen dritten (1123) Längsträger, die zueinander parallel sind und sich gemäß der Haupterstreckungsrichtung (1111) erstrecken;
∘ eine Vielzahl von Querträgern (1224d), die entlang der Haupterstreckungsrichtung (1111) verteilt ist und den ersten, zweiten und dritten Längsträger (1121, 1122, 1123) derart miteinander verbindet, dass die Querträger (1224d) eine Vielzahl von Dreiecken (1224) bilden;
∘ eine Vielzahl von Zugstangen (1225), die mindestens zwei Dreiecke (1224) von der Vielzahl von Dreiecken (1224) mechanisch miteinander verbindet.

3. Solarnachführer (1000) nach Anspruch 2, wobei die Vielzahl von Zugstangen (1225) die Stützstruktur (1120) mechanisch in Spannung zwingt.

4. Solarnachführer (1000) nach einem der Ansprüche 2 oder 3, wobei sich der erste Stützbogen (1140) und der zweite Stützbogen (1160) jeweils in einem ersten Abstand L1 (1120d) vom ersten Ende (1120a) und in einem zweiten Abstand L3 (1120f) vom zweiten Ende (1120b) der Stützstruktur (1120) derart befinden, dass das erste Ende (1120a) und das zweite Ende (1120b) der Stützstruktur (1120) relativ zum ersten Stützbogen (1130) und zum zweiten Stützbogen (1150)' überhängend angeordnet sind.

5. Solarnachführer (1000) nach Anspruch 4, wobei der erste Abstand L1 (1120d) und der zweite Abstand L3 (1120f) zwischen L/9 und L/2, vorzugsweise zwischen L/6 und L/2,5 liegen und in vorteilhafter Weise gleich L/3 sind.

6. Solarnachführer (1000) nach einem der Ansprüche 2 bis 5, wobei die Vielzahl von Dreiecken (1124) gemäß einer unregelmäßigen Verteilung entlang der Haupterstreckungsrichtung (1111) angeordnet ist und wobei vorzugsweise die unregelmäßige Verteilung der Vielzahl von Dreiecken (1124) entlang der Hauptrichtung (1111) eine Dichte von Dreiecken (1124) aufweist, die im Bereich von mindestens einem von dem ersten Stützbogen (1130) und dem zweiten Stützbogen (1150), vorzugsweise im Bereich des ersten Stützbogens (1130), höher ist.

7. Solarnachführer (1000) nach einem der Ansprüche 2 bis 6, wobei der Abstand zwischen zwei aufeinanderfolgenden Dreiecken (1224) gemäß der Haupterstreckungsrichtung (1111) zwischen dem ersten Ende (1120a) und dem ersten Stützbogen (1130) gleich P1 (1224e) ist, zwischen dem zweiten Stützbogen (1150) und dem zweiten Ende (1120b) gleich P3 (1224g) ist und zwischen dem ersten Stützbogen (1130) und dem zweiten Stützbogen (1150) gleich P2 (1224f) ist, mit P3 gleich P1 und P2 kleiner oder gleich P1.

8. Solarnachführer (1000) nach einem der Ansprüche 2 bis 7, umfassend mindestens vier, vorzugsweise mindestens fünf und in vorteilhafter Weise mindestens sieben Dreiecke (1224) zwischen dem ersten Stützbogen (1130) und dem zweiten Stützbogen (1150).

9. Solarnachführer (1000) nach Anspruch 8, wobei der Abstand zwischen zwei aufeinanderfolgenden Dreiecken (1224), die zwischen dem ersten Stützbogen (1130) und dem zweiten Stützbogen (1150) angeordnet sind, in Abhängigkeit von ihrer Entfernung in Bezug auf den ersten Stützbogen (1130) zunimmt.

10. Solarnachführer (1000) nach einem der Ansprüche 2 bis 9, wobei mindestens ein Querträger (1224d) relativ zum ersten Stützbogen (1130) gemäß seinem Durchmesser angeordnet ist und wobei vorzugsweise mindestens ein Querträger (1224d) relativ zum zweiten Stützbogen (1150) gemäß seinem Durchmesser angeordnet ist.

11. Solarnachführer nach einem der Ansprüche 2 bis 10, wobei die Dreiecke (1224) gleichseitig sind und wobei sich die Dreiecke (1224) in zur Haupterstreckungsrichtung (1111) orthogonalen Ebenen erstrecken.

12. Solarnachführer (1000) nach einem der Ansprüche 2 bis 11, wobei jedes Dreieck (1224) umfasst:
• mindestens eine erste Spitze (1224a), die im Bereich des ersten Längsträgers (1121) angeordnet ist;
• mindestens eine zweite Spitze (1224b), die im Bereich des zweiten Längsträgers (1122) angeordnet ist;
• mindestens eine dritte Spitze (1224c), die im Bereich des dritten Längsträgers (1123) angeordnet ist;
und wobei jede erste Spitze (1224a) eines Dreiecks (1224) über mindestens eine Zugstange (1225) mit mindestens einer zweiten Spitze (1224b) und mit mindestens einer dritten Spitze (1224c) mindestens eines anderen Dreiecks (1224) verbunden ist.

13. Solarnachführer (1000) nach Anspruch 12, wobei jede zweite Spitze (1224b) eines Dreiecks (1224) über mindestens eine Zugstange (1225) mit mindestens einer ersten Spitze (1224a) und mit mindestens einer dritten Spitze (1224c) mindestens eines anderen Dreiecks (1224) verbunden ist.

14. Solarnachführer (1000) nach einem der Ansprüche 12 oder 13, wobei jede dritte Spitze (1224c) eines Dreieck (1224) über mindestens eine Zugstange (1225) mit mindestens einer ersten Spitze (1224a) und mit mindestens einer zweiten Spitze (1224b) mindestens eines anderen Dreiecks (1224) verbunden ist.

15. Solarnachführer (1000) nach einem der Ansprüche 2 bis 14, wobei der Querschnitt, in typischer Weise der Durchmesser mindestens eines Teils der Zugstangen (1225), proportional zu ihren Längen ist.

16. Solarnachführer (1000) nach einem der vorangehenden Ansprüche, wobei die bewegliche Vorrichtung (1100) derart ausgelegt ist, dass die Stützstruktur (1120) vollständig von dem ersten Stützbogen (1130) und dem zweiten Stützbogen (1150) gestützt wird.

17. Solarnachführer (1000) nach einem der vorangehenden Ansprüche, umfassend ferner Rollorgane, die auf der ersten Bodenabstützung (1140) und der zweiten Bodenabstützung (1160) rotatorisch angebracht sind, wobei die Rollorgane derart ausgelegt sind, dass der erste Bogen (1130) und der zweite Bogen (1150) rotatorisch geführt werden und ganz allein die bewegliche Vorrichtung (1100) stützen.

18. Solarnachführer (1000) nach Anspruch 17, wobei die erste Bodenabstützung (1140) mindestens zwei Stützrollen (1142a, 1142b) umfasst, die ein Rollorgan bilden und ausgelegt sind, um auf einem Rollstreifen (1131) zu rollen, der von dem ersten Stützbogen (1130) getragen wird und ausgelegt sind, um ganz allein den ersten Stützbogen (1130) zu stützen und zu führen und wobei die kinematische Antriebsvorrichtung (1141) ein Übertragungsorgan umfasst, das ausgelegt ist, um mit einem komplementären Übertragungsorgan zusammenzuwirken, das von dem ersten Stützbogen (1130) getragen wird, so dass der rotatorische Anrieb des ersten Stützbogens (1130) in Bezug auf die erste Bodenabstützung (1140) gestattet ist und wobei die zweite Bodenabstützung (1160) mindestens zwei Stützrollen (1161a, 1161b) umfasst, die ein Rollorgan bilden und ausgelegt sind, um auf einem Rollstreifen (1151) zu rollen, der von dem zweiten Stützbogen (1150) getragen wird und ausgelegt sind, um ganz allein den zweiten Stützbogen (1150) zu stützen und um die Rotation des zweiten Stützbogens (1150) in Bezug auf die zweite Bodenabstützung (1160) zu führen.

19. Solarnachführer (1000) nach einem der Ansprüche 17 oder 18, wobei die erste Bodenabstützung (1140) mindestens eine Sohle (1140a) umfasst, die auf dem Boden angeordnet ist und mindestens zwei Füße (1140b), die mit der Sohle (1140a) fest verbunden sind und ganz allein die Rollorgane über eine Stange zum Nachstellen der Neigung (1140c) stützen, die um eine Achse zum Nachstellen der Neigung (1141c), die senkrecht zur Haupterstreckungsrichtung (1111) ist, rotatorisch frei angebracht ist, und wobei die zweite Bodenabstützung (1160) mindestens eine Sohle (1160a) umfasst, die auf dem Boden angeordnet ist und mindestens zwei Füße (1160b), die mit der Sohle (1140a) fest verbunden sind und ganz allein die Rollorgane über eine Stange zum Nachstellen der Neigung (1160c) stützen, die um eine Achse zum Nachstellen der Neigung (1161c), die senkrecht zur Haupterstreckungsrichtung (1111) ist, rotatorisch frei angebracht ist.

20. Solarfeld, umfassend eine Vielzahl von Solarnachführern (1000) nach einem der vorangehenden Ansprüche, wobei mindestens einige der Solarnachführer (1000) parallel zueinander, vorzugsweise gemäß der Nord-Süd-Richtung, angeordnet sind.

## Claims

1. Solar tracker (1000) comprising at least:
• a mobile device (1100) comprising at least:
∘ a table (1110) extending longitudinally in a main direction of extension (1111) and comprising at least one device for collecting solar energy (1112);
∘ a support structure (1120) extending longitudinally over a length L (1120c) in the main direction of extension (1111) and supporting the table (1110) and comprising a first end (1120a) and a second end (1120b);
∘ a first support arch (1130) and a second support arch (1150) configured to support the support structure (1120);
• a first ground support (1140) and a second ground support (1160) configured to respectively support the first support arch (1130) and the second support arch (1150);
• a kinematic drive device (1141) configured to drive the mobile device (1100) in rotation relative to the first ground support (1140) and to the second ground support (1160); the solar tracker (1000) being **characterized in that** the support structure (1120) is a beam in the form of a rigid lattice structure comprising spars (1121, 1122, 1123) connected by cross members (1224d) and tie rods (1225).

2. Solar tracker (1000) according to claim 1, wherein said support structure (1120) comprises:
∘ at least a first (1121), a second (1122) and a third (1123) spar parallel to each other and extending in the main direction of extension (1111);
∘ a plurality of cross members (1224d) distributed along the main direction of extension (1111) and interconnecting the first, second, and third spars (1121, 1122, 1123) so that the cross members (1224d) form a plurality of triangles (1224);
∘ a plurality of tie rods (1225) mechanically connecting together at least two triangles (1224) of the plurality of triangles (1224).

3. Solar tracker (1000) according to claim 2, wherein said plurality of tie rods (1225) mechanically tension the support structure (1120).

4. Solar tracker (1000) according to any one of claims 2 or 3, wherein the first support arch (1140) and the second support arch (1160) are respectively located at a first distance L1 (1120d) from the first end (1120a) and at a second distance L3 (1120f) from the second end (1120b) of the support structure (1120) so that the first end (1120a) and the second end (1120b) of the support structure (1120) are cantilevered relative to the first support arch (1130) and the second support arch (1150).

5. Solar tracker (1000) according to claim 4, wherein the first distance L1 (1120d) and the second distance L3 (1120f) are between L/9 and L/2, preferably between L/6 and L/2.5 and advantageously equal to L/3.

6. Solar tracker (1000) according to any one of claims 2 to 5, wherein the plurality of triangles (1124) are arranged in an irregular distribution along said main direction of extension (1111), and preferably wherein the irregular distribution of the plurality of triangles (1124) along said main direction (1111) exhibits a greater density of triangles (1124) at least among the first support arch (1130) and the second support arch (1150), preferably at the first support arch (1130).

7. Solar tracker (1000) according to any one of claims 2 to 6, wherein the distance between two consecutive triangles (1224) in the main direction of extension (1111) is equal to P1 (1224e) between the first end (1120a) and the first support arch (1130), is equal to P3 (1224g) between the second support arch (1150) and the second end (1120b), and is equal to P2 (1224f) between the first support arch (1130) and the second support arch (1150), with P3 being equal to P1 and with P2 being less than or equal to P1.

8. Solar tracker (1000) according to any one of claims 2 to 7, comprising at least four, preferably at least five, and advantageously at least seven triangles (1224) between the first support arch (1130) and the second arch. support (1150).

9. Solar tracker (1000) according to claim 8, wherein the distance between two consecutive triangles (1224) disposed between the first support arch (1130) and the second support arch (1150) increases as a function of their distance from the first support arch (1130).

10. Solar tracker (1000) according to any one of claims 2 to 9, wherein at least one cross member (1224d) is arranged relative to the first support arch (1130) according to its diameter, and wherein preferably at least one cross member (1224d) is arranged relative to the second support arch (1150) according to its diameter.

11. Solar tracker according to any one of claims 2 to 10, wherein the triangles (1224) are equilateral and wherein the triangles (1224) extend in planes orthogonal to the main direction of extension (1111).

12. Solar tracker (1000) according to any one of claims 2 to 11 wherein each triangle (1224) comprises:
• at least one first vertex (1224a) disposed at the level of the first spar (1121);
• at least one second vertex (1224b) disposed at the level of the second spar (1122);
• at least one third vertex (1224c) disposed at the level of the third spar (1123);
and wherein each first vertex (1224a) of a triangle (1224) is connected via at least one tie rod (1225) to at least one second vertex (1224b) and to at least one third vertex (1224c) of at least one other triangle (1224).

13. Solar tracker (1000) according to claim 12, wherein each second vertex (1224b) of a triangle (1224) is connected via at least one tie rod (1225) to at least one first vertex (1224a) and to at least one third vertex (1224c) of at least one other triangle (1224).

14. Solar tracker (1000) according to any one of claims 12 or 13, wherein each third vertex (1224c) of a triangle (1224) is connected via at least one tie rod (1225) to at least one first vertex (1224a) and at least one second vertex (1224b) of at least one other triangle (1224).

15. Solar tracker (1000) according to any one of claims 2 to 14, wherein the section, typically the diameter of at least part of the tie rods (1225), is proportional to their lengths.

16. Solar tracker (1000) according to any preceding claim, wherein the mobile device (1100) is configured so that the support structure (1120) is fully supported by the first support arch (1130) and the second support arch (1150).

17. Solar tracker (1000) according to any one of the preceding claims, further comprising rolling members rotatably mounted on the first ground support (1140) and the second ground support (1160), the rolling members being configured to guide the first arch (1130) and the second arch (1150) in rotation, and to support the mobile device (1100) on their own

18. Solar tracker (1000) according to claim 17, wherein the first ground support (1140) comprises at least two support rollers (1142a, 1142b) forming a rolling member and configured to run on a tread band (1131) carried by the first support arch (1130) and configured to support on their own and to guide the first support arch (1130), and wherein the kinematic drive device (1141) comprises a transmission member configured to interact with a complementary transmission member carried by the first support arch (1130) so as to allow rotation of the first support arch (1130) relative to the first ground support (1140), and in which the second ground support arch (1160) comprises at least two support rollers (1161a, 1161b) forming a running member and configured to roll on a tread band (1151) carried by the second support arch (1150) and configured to support on their own and to guide the rotation of the second support arch (1150) relative to the second ground support (1160).

19. Solar tracker (1000) according to any one of claims 17 or 18, wherein the first ground support (1140) comprises at least one pad (1140a) arranged on the ground and at least two feet (1140b) secured to the pad (1140a) and supporting on their own the rolling members via a tilting compensation bar (1140c) mounted freely in rotation about a tilting compensation axis (1141c) perpendicular to the main direction of extension (1111), and wherein the second ground support (1160) comprises at least one pad (1160a) disposed on the ground and at least two feet (1160b) secured to the pad (1140a) and supporting on their own the rolling members via a tilting compensation bar (1160c) mounted to rotate freely about a tilting compensation axis (1161c) perpendicular to the main direction of extension (1111).

20. Solar field comprising a plurality of solar trackers (1000) according to any one of the preceding claims, wherein at least some of the solar trackers (1000) are arranged parallel to each other, preferably in the North/South direction.
